# NEUE EUROPÄISCHE PATENTSCHRIFT

(11) **EP 1 438 213 B2**
(45) Veröffentlichungstag und Bekanntmachung des Hinweises auf die Entscheidung über den Einspruch: **14.01.2009**
(45) Hinweis auf die Patenterteilung: 18.01.2006
(21) Anmeldenummer: 02782921.7
(22) Anmeldetag: 16.10.2002
(51) Int. Cl.: B60R 7/00

(54) **NETZANORDNUNG ZUR MONTAGE AN EINEM RAHMEN**
NET ARRAY FOR MOUNTING IN A FRAME
ENSEMBLE FILET DESTINE A ETRE MONTE SUR UN CADRE

(30) Priorität: 26.10.2001 DE 20117369 U
(43) Veröffentlichungstag der Anmeldung: 21.07.2004
(73) Patentinhaber: Nölle-Pepin GmbH & Betriebs KG, 58332 Schwelm (DE)
(72) Erfinder: NÖLLE, Hans-Erich, 58332 Schwelm (DE)
(74) Vertreter: Lelgemann, Karl-Heinz
(86) Internationale Anmeldenummer: PCT/EP2002/011546
(87) Internationale Veröffentlichungsnummer: WO 2003/037676

(56) Entgegenhaltungen:
- WO-A1-01/34433
- DE-A- 2 938 357
- DE-A- 4 228 260
- DE-U- 8 601 047
- DE-U1- 8 323 849
- DE-U1- 20 018 527
- FR-A- 2 198 430

## Beschreibung

Die Erfindung bezieht sich auf eine Netzanordnung nach dem Oberbegriff des Patentanspruchs 1.

Derartige Netzanordnungen sind häufig Bestandteile von Haltenetzen, die zur Fixierung aller möglichen Arten von Gegenständen auf Türinnenflächen, Sitzrückflächen od.dgl. Flächen dienen.

Bekannte, mit einer derartigen Netzanordnung versehene Haltenetze erfordern einen beträchtlichen Montageaufwand, der aus wirtschaftlichen Gründen eine Vielzahl von an sich nicht erforderlichen Transportvorgängen zur Folge hat.

Aus der gattungsbilden den DE 42 28 260 A ist ein Netz für Fahrzeuge bekannt, welches mittels eines Rahmens an einer Anbringungsfläche montierbar ist. Zu dem Netz gehört ein Netzteil und ein Drahtteil, der außer an einer Seite des Netzteils durch alle Randmaschen desselben geführt ist. Bei oder nach der Montage der aus Netzteil und Drahtteil bestehenden Einheit am Rahmen wird das Zugglied an seinen beiden Enden an am Rahmen vorgesehenen Halteeinrichtungen fixiert.

Der Erfindung liegt die Aufgabe zugrunde, die vorstehend geschilderte Netzanordnung zur Montage an einem Rahmen derart weiterzubilden, dass der Aufwand zur Montage eines eine derartige Netzanordnung aufweisenden Haltenetzes od.dgl. erheblich reduziert ist.

Diese Aufgabe wird erfindungsgemäß durch die Merkmale im kennzeichnenden Teil des Patentanspruchs 1 gelöst. Die unmittelbar mit dem Netzteil der Netzanordnung zusammenwirkenden Bestandteile derselben bilden erfindungsgemäß mit dem Netzteil die vormontierte Einheit, die als solche mit dem Rahmen des späteren Haltenetzes in Eingriff bringbar ist. Hierdurch ergibt sich eine erhebliche Vereinfachung der Montage und damit eine erhebliche Reduzierung des gesamten für die Montage des späteren Haltenetzes erforderlichen Aufwands.

Die derart vormontierte Netzanordnung kann durch Herstellung eines Eingriffs zwischen den Enden des Zugglieds und des Drahtteils einerseits sowie entsprechender am Rahmen vorgesehener Aufnahmeausnehmungen, Clipsnuten od.dgl. zum Haltenetz montiert werden.

Jedes Übergangsteil ist gemäß der Ausgestaltung nach Patentanspruch 2 in einfacher Weise an dem ihm zugeordneten freien Ende des Drahtteils lösbar fixierbar.

Der Eingriff zwischen dem Übergangsteil und dem ihm zugeordneten Ende des Zugglieds ist in konstruktiv wenig aufwendiger Weise gemäß Patentanspruch 3 realisierbar.

Je nach Anordnung und Ausgestaltung der rahmenseitigen Aufnahmeausnehmungen, Clipsnuten ud.dgl. kann die Montage der vorstehend geschilderten Netzanordnung am Rahmen bei Aufrechterhaltung der Verbindung zwischen dem Zugglied und dem Drahtteil vorgenommen werden, oder aber die beiden Übergangsglieder können jeweils vom Zugglied und vom Drahtteil entfernt werden, wodurch vor der Montage der Netzanordnung die fixe Verbindung zwischen Zugglied und Drahtteil aufhebbar ist.

Gemäß Patentanspruch 4 ergibt sich eine weitere vorteilhafte Ausführungsform der Erfindung.

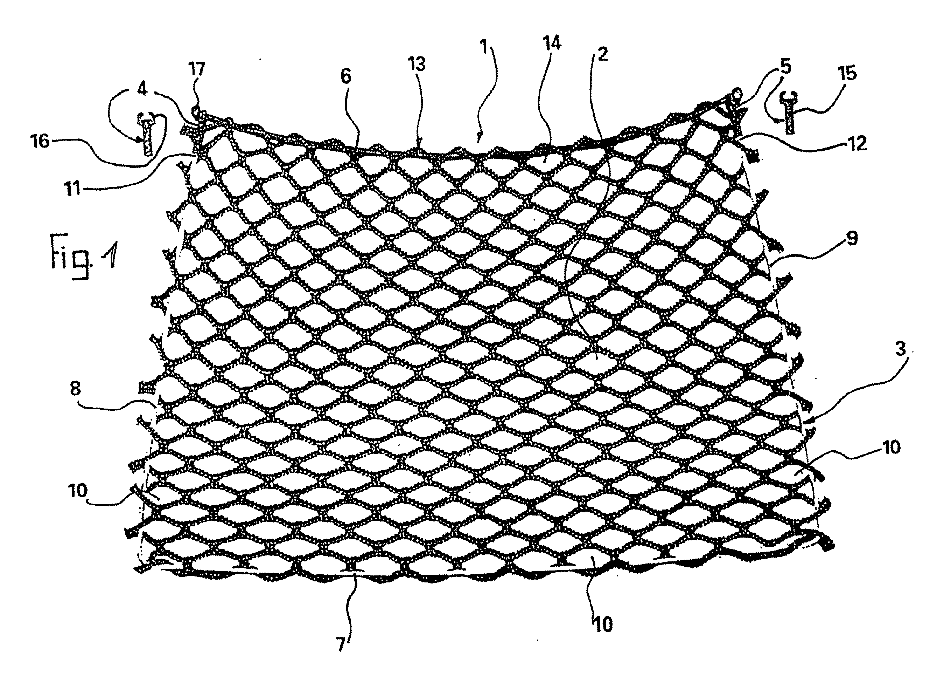

Im Folgenden wird die Erfindung anhand einer Ausführungsform unter Bezugnahme auf die Zeichnung näher erläutert, in deren einziger Figur eine erfindungsgemäße Netzanordnung zur Montage an einem Rahmen prinzipiell dargestellt ist, wobei zwei Übergangsteile der Netzanordnung sowohl als Bestandteil derselben als auch - zur Verdeutlichung - als Einzelteile gezeigt sind.

Eine in der einzigen Figur gezeigte erfindungsgemäße Netzanordnung 1 ist als solche Bestandteil eines im übrigen in der Figur nicht gezeigten Haltenetzes, welches dazu dient, Gegenstände jedweder Art an der Rückseite eines Sitzes, einer Türfläche, oder einer ähnlichen Fläche zu haltern. Hierzu gehört zu dem Haltenetz ein in der Figur ebenfalls nicht dargestellter Rahmen, mit dem die erfindungsgemäße Netzanordnung 1 in festen Eingriff bringbar ist.

Die Netzanordnung 1 hat ein Netzteil 2, ein Drahtteil 3, zwei Übergangsteile 4, 5 und ein Zugglied 6.

Das Netzteil 2 besteht aus einem in gewisser Weise elastischen textilen Werkstoff und ist im dargestellten Ausführungsbeispiel viereckig, d.h. etwa rechteckförmig ausgebildet.

Das Drahtteil 3 hat eine Grundseite 7 und zwei Schenkel 8, 9, die sich im dargestellten Ausführungsbeispiel von der Grundseite 7 etwa in Vertikalrichtung aufwärts erstrecken, wodurch das Drahtteil 3 eine etwa U-förmige Ausgestaltung aufweist.

Mit seiner Grundseite 7 und den beiden Schenkeln 8, 9 ist das Drahtteil 3 durch die Randmaschen 10 an den der Grundseite 7 und den Schenkeln 8, 9 des Drahtteils 3 zugeordneten Seiten des Netzteils 2 geführt.

Zwischen den freien Enden 11, 12 der Schenkel 8, 9 des Drahtteils 3 erstreckt sich eine drahtteilfreie Seite 13 des Netzteils 2, durch deren Randmaschen 14 das Zugglied 6 geführt ist. Das zweckmäßigerweise aus einem elastischen Gummiwerkstoff hergestellte Zugglied 6 ist mittels der beiden Übergangsteile 4, 5 mit den freien Enden 11, 12 der Schenkel 8, 9 des Drahtteils 3 verbunden.

Jedes Übergangsteil 4, 5 hat einen zylindrischen Aufsteckabschnitt 15, mittels dem das Übergangsteil 4, 5 auf dem ihm zugeordneten freien Ende 11, 12 des Schenkels 8, 9 des Drahtteils 3 lösbar fixierbar ist. Des weiteren hat jedes Übergangsteil 4, 5 einen Clipsabschnitt 16, in den ein mit einem Abschlußkopf 17 versehenes Ende des Zugglieds 6 einclipsbar ist.

Durch Aufschieben der in der einzigen Figur auch separat gezeigten Übergangsteile 4, 5 mit deren zylindrischen Aufsteckabschnitten 15 auf die freien Enden 11, 12 des die ihm zugeordneten Randmaschen des Netzteils 2 bereits durchsetzenden Drahtteils 3 und durch Einclipsen der mit den Abschlußköpfen 17 versehenen Enden des Zugglieds 6 in den Clipsabschnitt 16 der beiden Übergangsteile 4, 5 kann in einfacher Weise die in der Figur gezeigte vormontierte Netzanordnung 1 geschaffen werden. Zur Montage des diese Netzanordnung 1 aufweisenden Haltenetzes muß dann lediglich ein Eingriff zwischen dem Drahtteil 3 und den Enden des Zugglieds 6 mit einem in der Figur nicht gezeigten Rahmen des Haltenetzes hergestellt werden, wobei zu diesem Zweck dieser mit geeigneten Aufnahmeausnehmungen, Clipsnuten od.dgl. versehen ist.

## Patentansprüche

1. Netzanordnung zur Montage an einem Rahmen, mit einem Netzteil (2), einem Drahtteil (3), der außer an einer Seite (13) durch alle Randmaschen (10) des Netzteils (2) geführt ist und dessen Konfiguration an die des Netzteils (2) angepaßt ist, und einem elastischen Zugglied (6), das an der drahtteilfreien Seite (13) des Netzteils (2) durch dessen Randmaschen (14) geführt ist, **dadurch gekennzeichnet, dass** die Netzanordnung (1) eine vormontierte Einheit bildet, bei der das Zugglied (6) an seinen beiden Enden mit den beiden freien Enden (11, 12) des Drahtteils (3) verbunden ist und deren Drahtteil (3) und deren Zugglied (6) zur Montage der Netzanordnung (1) am Rahmen in diesen einsetzbar sind, und daß auf den beiden freien Enden (11, 12) des Drahtteils (3) jeweils ein Übergangsteil (4, 5) sitzt, mit denen die beiden Enden des Zugglieds (6) in Eingriff bringbar sind.

2. Netzanordnung nach Anspruch 1, bei der jedes Übergangsteil (4, 5) einen zylindrischen Aufsteckabschnitt (15) aufweist, mit dem es auf das ihm zugeordnete freie Ende (11, 12) des Drahtteils (3) aufschiebbar und dort lösbar fixierbar ist.

3. Netzanordnung nach Anspruch 1 oder 2, bei der jedes Übergangsteil (4, 5) einen Clipsabschnitt (16) aufweist, in den das mit einem Abschlußkopf (17) versehene, ihm zugeordnete Ende des Zugglieds (6) einclipsbar ist.

4. Netzanordnung nach einem der Ansprüche 1 bis 3, bei der das Drahtteil (3) eine Grundseite (7) und zwei von deren Enden sich erstreckende Schenkel (8, 9) aufweist, wobei das Netzteil (2) eine viereckige, trapezförmige, rechteckige oder quadratische Form aufweist.

## Claims

1. A netting arrangement for mounting on a frame with a piece of netting (2), a piece of wire (3) that is threaded but for one side (13) through all the selvedge loops (10) of the piece of netting (2) and whose configuration mates with the configuration of the piece of netting (2) and with an elastic pull member (6) that is threaded through the selvedge loops (14) of the piece of netting (2) on the wire-free side (13) thereof, **characterized in that** the net arrangement (1) forms a preassembled unit, the pull member (6) of which is connected at its two ends to the two free ends (11, 12) of the piece of wire (3) and whose piece of wire (3) and pull member (6) is adapted to be inserted into the frame for mounting said net arrangement (1) onto said frame, and **in that** a transition piece (4, 5) by means of which the two ends of the pull member (6) are interengageable is seated on the two free ends (11, 12) of the piece of wire (3).

2. The netting arrangement as set forth in claim 3, in which each transition piece (4, 5) comprises a cylindrical cap portion (15) by means of which it is adapted to be slidably mounted onto the free end (11, 12) of the piece of wire (3) associated thereto and to be removably affixed there.

3. The netting arrangement as set forth in claim 1 or 2, in which each transition piece (4, 5) comprises a clip portion (16) into which the end of the pull member (6) associated thereto and provided with a terminating head (17) is adapted to be clipped.

4. The netting arrangement as set forth in any one of the claim 1 through 3, in which the piece of wire (3) comprises a bottom side (7) and two legs (8, 9) extending from the ends thereof, the piece of netting (2) having a quadrangular, trapezoidal, rectangular or square shape.

## Revendications

1. Montage de filet destiné à être monté sur un cadre avec une partie filet (2), une partie fil (3) enfilée, sauf sur un côté (13), dans toutes les mailles lisières (10) de la partie filet (2) et de configuration adaptée à celle de la partie filet (2) et avec un organe de traction (6) élastique enfilé dans les mailles lisières (14) de la partie filet (2) sur son côté (13) dépourvu de fil, **caractérisé en ce que** l'ensemble filet (1) forme un ensemble préassemblé dans lequel l'organe de traction (6) est relié à ses deux extrémités aux deux extrémités libres (11, 12) de la partie fil (3) et dont la partie fil (3) et l'organe de traction (6) sont adaptés pour être insérés dans le cadre pour le montage de l'ensemble filet (1), et **en ce que**
une pièce de transition (4, 5) permettant de mettre en prise les deux extrémités de l'organe de traction (6) est installée sur chacune des extrémités libres (11, 12) de la partie fil (3).

2. Montage de filet selon la revendication 1, dans lequel chaque pièce de transition (4, 5) comporte une portion formant capuchon (15) cylindrique destinée à coiffer l'extrémité libre (11, 12) de la partie fil (3) qui lui est associée et à laquelle elle est apte à être fixée de façon amovible.

3. Montage de filet selon la revendication 1 ou 2, dans lequel chaque pièce de transition (4, 5) comporte une portion formant clip (16) dans laquelle l'extrémité de l'organe de traction (6) qui lui est associée et est munie d'une tête terminale (17) est susceptible d'être clippée.

4. Montage de filet selon l'une quelconque des revendications 1 à 3, dans lequel la partie fil (3) comporte un côté formant base (7) et deux branches (8, 9) s'étendant à partir de ses extrémités, la partie filet (2) affectant une forme quadrangulaire, trapézoïdale, rectangulaire ou carrée.
